# EUROPEAN PATENT APPLICATION

(11) **EP 4 614 751 A1**
(43) Date of publication of application: **10.09.2025**
(21) Application number: 24162494.9
(22) Date of filing: 08.03.2024
(51) Int. Cl.: H02H 7/16, H02H 7/18, H02H 9/04

(54) **INTERLOCKING OF ENERGY STORAGE ELECTRICAL PROTECTION DEVICES**

(71) Applicant: Hitachi Energy Ltd, 8050 Zürich (CH)
(72) Inventor: Zhang, Zichi, 723 58 Västerås (SE); Noisette, Philippe, 1228 Plan-les-Ouates (CH); Söderblom, Anton, 749 43 Enköping (SE)
(74) Representative: AWA Sweden AB

(57) **Abstract**

The present application relates to a Method of controlling a protection circuit for an energy storage module (ESM) of an energy storage system (ESS), the energy storage module (ESM) having a positive terminal and a negative terminal, wherein two or more protection devices (pd₁, pd₂) of the protection circuit are arranged to be activated to establish two or more respective discharging paths between the positive terminal and the negative terminal, the method comprising: measuring (S01) an operational value of the energy storage module (ESM), and if a measured operational value deviates from a predefined nominal operational value or nominal operational range, activating (S11) a first protection device (pd₁) of said two or more protection devices; determining (S20) if predefined conditions are satisfied to activate a second protection device (pd₂) of said two or more protection devices for further discharging of the energy storage module (ESM) wherein said predefined conditions include the measured operational value being equal to or exceeding or falling below a first threshold value, and if satisfied, activating (S21) the second protection device (pd₂). A control unit, a protection device, and an energy storage system is also disclosed.

## Description

### Technical Field

The present application is directed to the field of power system support, and in particular a method of controlling a protection circuit for an energy storage module of an energy storage system, a protection circuit, a control unit, and an energy storage system.

### Background

Flexible AC transmission system, FACTS, devices are static power-electronic devises that may be installed to energy storage systems and AC transmission networks in general. By series and/or shunt compensation, it is possible to increase e.g., power transfer capability, stability, and controllability of the networks.

The energy storage systems for power grid applications spans over a wide range of power demand from few MW up to hundreds of MW. The higher range of MW implies that storages contain oodles of energy storage modules, which are built up in different topologies. These topologies could be based on rack/cabinets, due to different reasons, e.g., transportation reasons, testing reasons and others. One of these racks could store a lot of energy (MJ range) and deliver a lot of power (MW range), which could impose a risk to the device itself, the equipment in the vicinity, or a human during discharge events with low impedance. When such a discharge event occurs, the forces and the heat that are generated can be of considerable risk, and can occur due to, e.g., external short circuiting or a malfunction of, or a failed operation of, a switch device connected to the energy storage module.

In the light of the above, there is a need for power system support which can increase the stability of the power systems.

### Summary

It is an object of the present disclosure to provide an improved solution that alleviates the mentioned drawbacks with present solutions. Furthermore, a first object of the disclosure is to provide a method of controlling a protection circuit for an energy storage module, such as an energy storage module of an energy storage system. The first object is solved by the method of claim 1. A second object of the disclosure is to provide a control unit comprising means to carry out said method. The second object is solved by the invention of claim 13. A third object of the disclosure is to provide a protection circuit for an energy storage module. The third object is solved by the protection circuit of claim 14. A fourth object of the disclosure is to provide an energy storage system. The fourth object is solved by the energy storage system of claim 15. Additional advantages are achieved by the preferred embodiments listed in the claims and the embodiments listed in the following.

The invention is based on the inventor's realization that, for circuits wherein an energy storage module having a positive terminal and a negative terminal wherein two or more protection devices are arranged to be activated to establish two or more respective discharging paths between the positive terminal and the negative terminal, wherein the order of activation of the first protection device and the second protection device is important to prevent a short circuit, the order of activation of the two or more protection devices can be ensured by interlocking the two or more protection devices so that they are activated in a sequential manner. This generally solves a plurality of problems of the prior art such as i) when activation timings of the two or more protection devices are out of order, ii) when a protection device is malfunctioning and cannot be activated. Activation timings are e.g., important when the order of activation of the protection devices are important, for instance when a first protection device is arranged to provide a high resistance discharging path and a second protection device is arranged to provide a low resistance discharging path. When the energy storage module is charged to a nominal operational level, and if the second protection device is activated first before the first protection device is activated, the energy of the energy storage module is discharged via the low resistance discharging path which can be, depending on charge of the energy storage module, effectively result in a short circuit which can negatively impact the performance of the energy storage module and/or the protection circuit and/or any other electronic circuit connected thereto.

Moreover, the invention is based on the inventor's realization that two or more protection devices can be interlocked by means of hardware interlocking and/or software interlocking. Hardware interlocking may e.g., be that a subsequent protection device cannot be physically activated before a precursor protection device has been activated. Software interlocking may e.g., be that a subsequent protection device can only be activated in response to a control signal based on a measurement of an operational value of the energy storage module and/or in response to verification that one or more predefined conditions are satisfied, for instance with regards to a precursor protection device.

The inventive concept generally allows for a more robust controllability of a protection circuit so as to prevent undesired short circuiting. Moreover, it provides safer operation of energy storage module. Moreover, it reduces risk of evolving a predicted and/or unpredicted fault of the energy storage module and/or the protection circuit. It also reduces risk of equipment in the vicinity of an affected energy storage module. In addition, it allows for reduced risk of loss of human lives. Moreover, it reduces risk of reduced availability of the energy storage module. Further, the above inventive concept advantageously allows for scalability, wherein any number of two or more protection device can be interlocked by hardware interlocking and/or software interlocking.

According to a first aspect, a method of controlling a protection circuit for an energy storage module of an energy storage system is provided. The energy storage module has a positive terminal and a negative terminal. Two or more protection devices of the protection circuit are arranged to be activated to establish two or more respective discharging paths between the positive terminal and the negative terminal. The method further comprising: measuring an operational value of the energy storage module, and if a measured operational value deviates from a predefined nominal operational value or nominal operational range, activating a first protection device of said two or more protection devices; determining if predefined conditions are satisfied to activate a second protection device of said two or more protection devices for further discharging of the energy storage module wherein said predefined conditions include the measured operational value being equal to or exceeding or falling below a first threshold value, and if satisfied, activating the second protection device.

By protection device, it may be meant any device configured to be operated between an inactive state and an active state, wherein the protection device in an inactive state substantially prevents discharging and in an active state enables discharging. For instance, a protection device may include a controllable switch, and optionally one or more further electrical components.

By energy storage module, it may be meant a module for storing energy. The energy storage module may have a positive terminal and a negative terminal. The energy storage module may comprise one or more energy storage unit. The energy storage module may comprise two or more energy storage units arranged in series and/or parallel. One or two or more energy storage units may be capacitors.

By operational value, it may be a voltage or a current associated with the energy storage module.

The method may involve activating N protection devices, wherein N is an integer number equal to 2 or any integer number higher than 2. As an example, the number of protection devices may be 2, 3, 4, 5, 6, 7, 8, 9, 10 or more.

Predefined conditions may, in addition to the measured operational value being equal to or exceeding or falling below a first threshold value, further include further conditions such as one or more additional first threshold values. Said first threshold values may be selected based on application.

According to one embodiment, the method comprises: determining if predefined initial conditions are satisfied to activate the first protection device of said two or more protection devices for discharging of the energy storage module, wherein said predefined initial conditions include the measured operational value being equal to or exceeding or falling below an initial threshold value, and if satisfied, activating the first protection device of said two or more protection devices. By this, it advantageously improves safety and makes controllability of the protection device even more robust.

Predefined initial conditions may, in addition to the measured operational value being equal to or exceeding or falling below an initial threshold value, further include further conditions such as one or more additional initial threshold values. Said initial threshold values may be selected based on application.

According to one embodiment, the first protection device is activated by means of a first activation signal, wherein the first activation signal is allowed to propagate to activate the first protection device on the condition that a first control signal is applied, the first control signal indicating that predefined initial conditions are satisfied to activate the first protection device. The first activation signal may be based on or be the measured operational value.

According to one embodiment, the second protection device is activated by means of a second activation signal, wherein the second activation signal is allowed to propagate to activate the second protection device on the condition that a second control signal is applied, the second control signal indicating that said predefined conditions to activate the second protection device are satisfied. The second activation signal may be based on or be the first activation signal.

According to one embodiment, the two or more protection devices are arranged for sequential activation, and an activation signal for a subsequent protection device is only transmittable if a precursor protection device has been activated.

According to one embodiment, the two or more protection devices are arranged for sequential activation, and a control signal for a subsequent protection device is only transmittable if a precursor protection device has been activated.

According to one embodiment, said measured operational value is a measured current or a measured voltage of the energy storage module. Said operational value may be any other suitable parameter of the energy storage module or any parameter value of the protection circuit.

According to one embodiment, two protection devices of the two or more protection devices are activated via serial control/activation interlocking or parallel control/activation interlocking. Any of the protection devices may be activated via serial control/activation interlocking or parallel control/activation interlocking. All of the protection devices may be activated via serial control/activation interlocking or parallel control/activation interlocking. By control interlocking, it may be meant software interlocking. By activation interlocking, it may be meant hardware interlocking.

According to one embodiment, a first discharging path is associated with a first conductive resistance and a second discharging path is associated with a second conductive resistance lower than the first conductive resistance.

According to one embodiment, wherein the first conductive resistance of the first discharging path is provided by at least a first resistor, and/or wherein the second conductive resistance of the second discharging path is provided by at least a second resistor having a cumulative series resistance which is lower than a cumulative series resistance of said at least a first resistor.

According to one embodiment, the method comprises: after activating the second protection device, determining if predefined further conditions are satisfied to activate further protection devices to initiate further discharging of the energy storage module, wherein said predefined further conditions include the measured operational value being equal to or exceeding or falling below further threshold values, and if satisfied, activating further protection devices.

Predefined further conditions may, in addition to the measured operational value being equal to or exceeding or falling below a further threshold value, further include further conditions such as one or more additional further threshold values. Said further threshold values may be selected based on application.

According to one embodiment, the further protection devices are activated by means of further activation signals, wherein further activation signals are allowed to propagate to activate the further protection devices on the condition that further control signals are applied, the further control signals indicating that the predefined further conditions are satisfied.

According to a second aspect, a control unit is provided. The control unit comprises means to carry out the method according to the first aspect or any embodiments thereof.

According to a third aspect, a protection circuit for an energy storage module is provided. The protection circuit comprises two or more protection devices arranged to be activated to establish two or more respective discharging paths between a positive terminal and a negative terminal of the energy storage module, wherein at least two protection devices of the two or more protection devices are interlocked by means of hardware interlocking and software interlocking.

According to a fourth aspect, an energy storage system, ESS, is provided. The energy storage system comprises an energy storage module having a positive terminal and a negative terminal. The energy storage system comprises a protection circuit according to the fourth aspect or any embodiments thereof. The protection circuit is arranged so that the two or more protection devices, when activated, establish corresponding two or more discharging paths between the positive terminal and the negative terminal. The energy storage system comprises a control unit according to the second aspect or any embodiments thereof.

The energy storage system may be adapted with a rack design, i.e., an ESS rack, comprising a plurality of energy storage modules connected in parallel and/or series. The ESS may be adapted with a floating design. The ESS may be adapted with a grounding connection point. The grounding connection point can be provided at any suitable connection point of the ESS, for instance at a middle point of the ESS. The ESS may be adapted for low voltage application. By low voltage it may be meant equal to and/or less than 1500V dc. The ESS may be adapted for high voltage application. By high voltage, it may be meant equal to and/or more than 1MV dc. The ESS may be adapted for intermediate voltage application. By intermediate voltage, it may be meant in a range 1500V dc to 1MV dc.

According to a fifth aspect of the invention, a computer program is provided. The computer program comprises instructions which, when the program is executed by a computer, cause the computer to carry out the method according to the first aspect or any embodiments thereof.

By computer, it may be meant any device capable of accepting and processing information for some result based on a program, software, or sequence of instructions on how the information is to be processed. The information may be in the form of digitalized data. As non-limiting examples, a computer may be a server, a stationary computing device, a portable computing device.

According to a sixth aspect, a computer-readable medium is provided. The computer readable medium comprises instructions which, when executed by a computer, cause the computer to carry out the method according to the first aspect or any embodiments thereof. The computer-readable medium may be any suitable medium for comprising instructions. The computer-readable medium may be a computer-readable storage medium.

Effects and features of the various additional aspects are largely analogous to those described above in connection with the first aspect. Embodiments mentioned in relation to the first aspect are largely compatible with the various additional aspects. It is further noted that the inventive concepts relate to all possible combinations of features unless explicitly stated otherwise.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Figs. 1a-1c show a working principle of a prior art solution;
Fig. 2a shows a current graph for the prior art solution;
Fig. 2b shows a schematic illustration of a method according to one embodiment of the disclosure;
Fig. 3 shows a schematic illustration of energy storage module and a protection circuit according to one embodiment of the disclosure;
Fig. 4 shows a schematic illustration of energy storage module and a protection circuit according to one embodiment of the disclosure;
Fig. 5 shows a schematic illustration of energy storage module and a protection circuit according to one embodiment of the disclosure;
Fig. 6 shows a schematic illustration of energy storage module and a protection circuit according to one embodiment of the disclosure;
Fig. 7 shows a schematic illustration of energy storage module and a protection circuit according to one embodiment of the disclosure;
Fig. 8 shows a schematic illustration of energy storage module and a protection circuit according to one embodiment of the disclosure;
Fig. 9a shows a schematic illustration of energy storage system according to one embodiment of the disclosure;
Fig. 9b shows a schematic illustration of energy storage system according to one embodiment of the disclosure.

### Description of Embodiments

Hereinafter, the principle and spirit of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

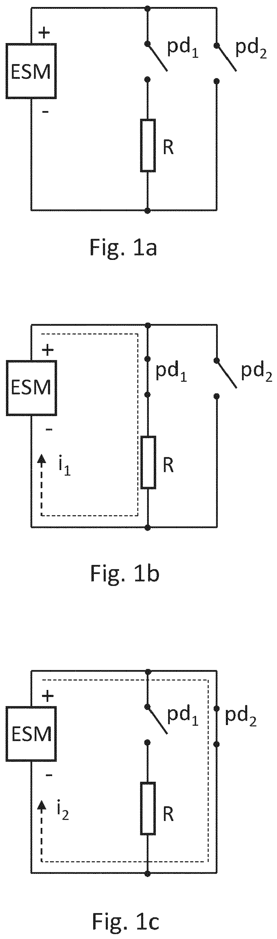

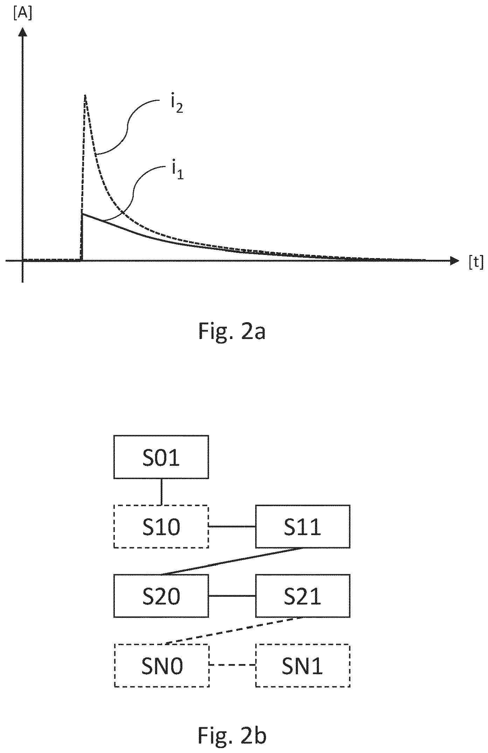

Figs. 1a-1c show a working principle of a prior art solution of a protection circuit for discharging an energy storage module ESM. The protection circuit comprises a first protection device pd1 and a second protection device pd2 is arranged to establish two discharging paths between a positive terminal and a negative terminal of the energy storage module ESM. In a first discharging path, a resistor R is provided. When closing the first protection device pd1 prior to closing the second protection device pd2, the voltage difference between the positive terminal of the energy storage module and the negative terminal of the energy storage module causes a first current i1 to flow in the first discharging path in which the resistor R is provided. Thus, the discharging of the energy storage module is limited by the resistor R. When closing the second protection device pd2 prior to closing the first protection device pd1, the voltage difference between the positive terminal of the energy storage module and the negative terminal of the energy storage module causes a second current i2 to flow in the second discharging path in which no resistor is provided. Thus, the energy storage module is substantially short-circuited. Fig. 2a shows a current graph for the prior art solution for when the first protection device is closed first and when the second protection device is closed first. Thereby, the sequence of closing protection device can be imperative to safely dissipating energy of an energy storage module.

Fig. 2b shows a schematic illustration of a method according to one embodiment of the disclosure. The method is of controlling a protection circuit for an energy storage module ESM of an energy storage system. The energy storage module ESM has a positive terminal and a negative terminal. The protection circuit comprises two or more protection devices pd1, pd2 which are arranged to be activated to establish two or more respective discharging paths between the positive terminal and the negative terminal. The method comprises: measuring S01 an operational value of the energy storage module ESM, and if a measured operational value deviates from a predefined nominal operational value or nominal operational range, activating S11 a first protection device pd1 of said two or more protection devices; determining S20 if predefined conditions are satisfied to activate a second protection device pd2 of said two or more protection devices for further discharging of the energy storage module ESM, wherein said predefined conditions include the measured operational value being equal to or exceeding a first threshold value, and if satisfied, activating S21 the second protection device pd2.

The method may optionally further comprise: determining S10 if predefined initial conditions are satisfied to activate the first protection device pd1 of said two or more protection devices for discharging of the energy storage module ESM, wherein said predefined initial conditions include the measured operational value being equal to or exceeding an initial threshold value, and if satisfied, activating S11 the first protection device pd1 of said two or more protection devices.

The method may optionally further comprise: after activating the second protection device pd2, determining SN0 if predefined further conditions are satisfied to activate further protection devices pdN to initiate further discharging of the energy storage module ESM, wherein said predefined further conditions include the measured operational value being equal to or exceeding further threshold values, and if satisfied, activating SN1 further protection devices pdN.

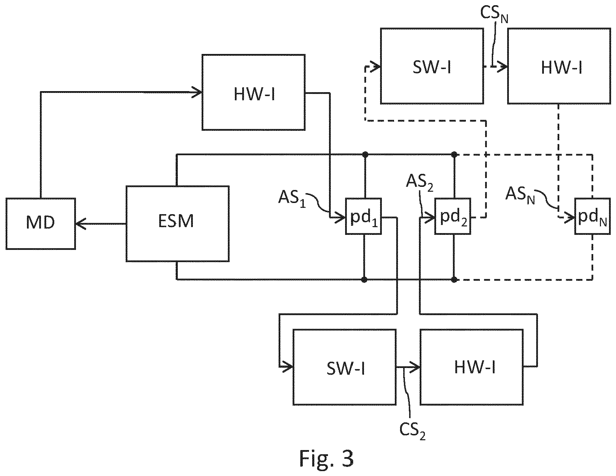

Fig. 3 shows a schematic illustration of energy storage module and a protection circuit according to one embodiment of the disclosure. The energy storage module ESm has a positive terminal and a negative terminal. A protection circuit comprising N protection devices pd1, pd2, pdN is arranged to establish, when activated, respective discharging paths between the positive terminal and the negative terminal of the energy storage module. An operational value of the energy storage module ESM is measured by a measurement device MD. The measured operational value may be a measured current Im or a measured voltage of the energy storage module ESM.

If the measured operational values deviates from a predefined nominal operational value or a predefined nominal operational range, a first hardware interlocking module HW-I is instructed to send a first activation signal AS1 to a first protection device pd1 to activate the first protection device pd1.

Following activation of the first protection device pd1, the activation signal AS1 is transmitted to a first software interlocking module SW-I which is configured to determine if predefined conditions are satisfied to activate a second protection device pd2 of said N protection devices for further discharging of the energy storage module, wherein said predefined conditions include the measured operational value being equal to or exceeding a first threshold value. If satisfied, the second protection device pd2 is activated. The second protection device pd2 is activated by means of a second activation signal AS2, wherein the second activation signal As2 is allowed to propagate to activate the second protection pd2 on the condition that a second control signal CS2 is applied, the second control signal indicating that said predefined conditions to activate the second protection device are satisfied. As illustrated in Fig. 3, the second control signal CS2 is sent from the first software interlocking module SW-I to a second hardware interlocking module HW-I by which the second hardware interlocking module HW-I is instructed to send a second activation signal AS2 to the second protection device pd2.

Following activation of the second protection device pd2, one or more further protection devices pdN can be activated by means of a further control signal CSN and a further activation signal ASN from a respective pair of a software interlocking module and a hardware interlocking module.

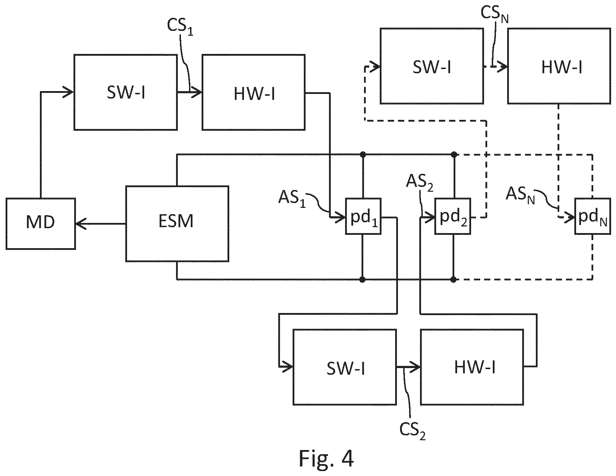

Fig. 4 shows a schematic illustration of energy storage module and a protection circuit according to one embodiment of the disclosure. In this embodiment, a software interlocking module is arranged subsequent to the measuring device MD and configured to determine if predefined initial conditions are satisfied to activate the first protection device pd1 of said two or more protection devices for discharging of the energy storage module ESM, wherein said predefined initial conditions include the measured operational value being equal to or exceeding an initial threshold value. The software interlocking module is configured to, if it is determined that the predefined initial conditions are satisfied, activate the first protection device pd1 of said two or more protection devices by instructing the first hardware interlocking module to do so. Each pair of software interlocking module and hardware interlocking module is arranged with series interlocking.

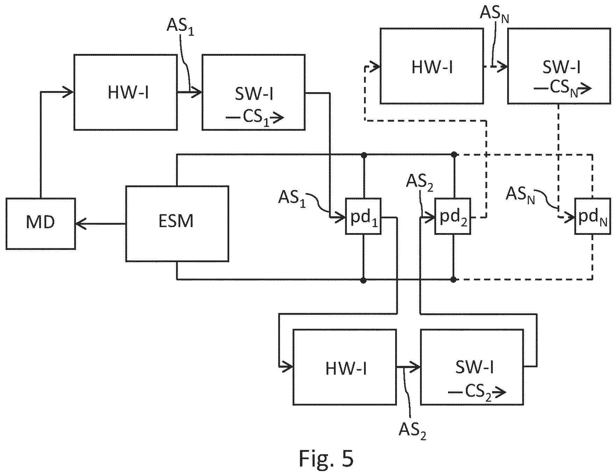

Fig. 5 shows a schematic illustration of energy storage module and a protection circuit according to one embodiment of the disclosure. In this embodiment, the software interlocking modules of each pair of software interlocking module and hardware interlocking module is arranged subsequent the hardware interlocking module. The software interlocking module of each pair of software interlocking module and hardware interlocking module is configured to receive a respective activation signal AS1, AS2, ASN, and in response to a respective control signal CS1, CS2, CSN allow propagation of the respective activation signals AS1, AS2, ASN to the respective protection devices pd1, pd2, pdN to activate the respective protection devices pd1, pd2, pdN. Each pair of software interlocking module and hardware interlocking module is arranged with series interlocking.

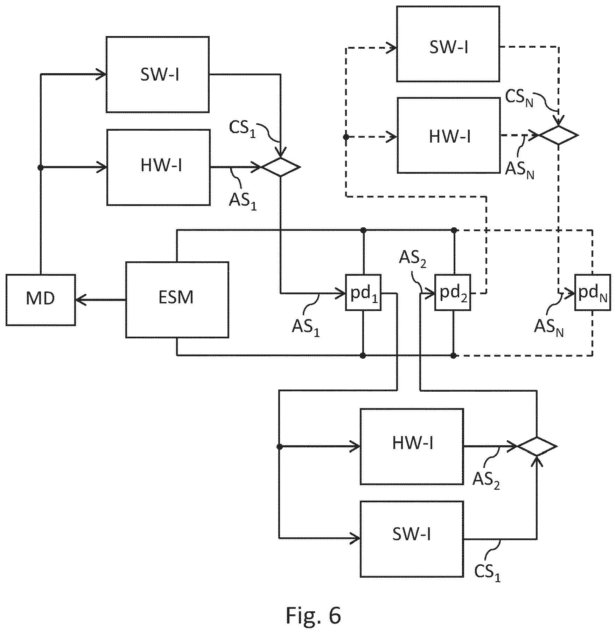

Fig. 6 shows a schematic illustration of energy storage module and a protection circuit according to one embodiment of the disclosure. In this embodiment, each pair of software interlocking module and hardware interlocking module is arranged with parallel interlocking. Thus, the respective activation signals AS1, AS2, ASN are only allowed to propagate if a respective control signal CS1, CS2, CSN is applied.

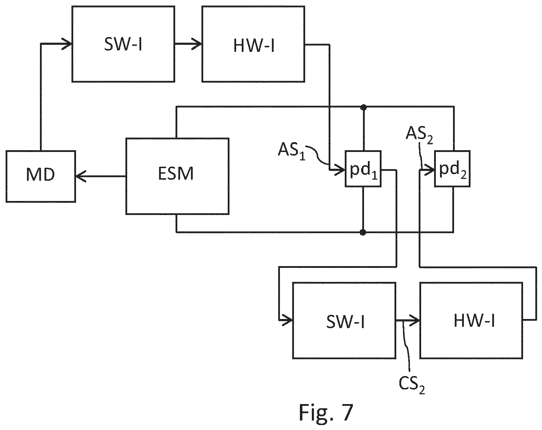

Fig. 7 shows a schematic illustration of energy storage module and a protection circuit according to one embodiment of the disclosure. The energy storage module ESM has a positive terminal and a negative terminal. A protection circuit comprising a first protection device pd1 and a second protection device pd2 is arranged to establish, when activated, a respective first discharging path and a second discharging path between the positive terminal and the negative terminal of the energy storage module. An operational value of the energy storage module ESM is measured by a measurement device MD. The measured operational value may be a measured current Im or a measured voltage of the energy storage module ESM. If the measured operational values deviates from a predefined nominal operational value or a predefined nominal operational range, a software interlocking module arranged subsequent to the measuring device MD receives the measured operational value and determines if predefined initial conditions are satisfied to activate the first protection device pd1 of said two or more protection devices for discharging of the energy storage module ESM, wherein said predefined initial conditions include the measured operational value being equal to or exceeding an initial threshold value. The software interlocking module is configured to, if it is determined that the predefined initial conditions are satisfied, activate the first protection device pd1 by instructing a first hardware interlocking module to do so. Following activation of the first protection device pd1, the activation signal AS1 is transmitted to a first software interlocking module SW-I which is configured to determine if predefined conditions are satisfied to activate the second protection device pd2 for further discharging of the energy storage module, wherein said predefined conditions include the measured operational value being equal to or exceeding a first threshold value. If satisfied, the second protection device pd2 is activated. The second protection device pd2 is activated by means of a second activation signal AS2, wherein the second activation signal As2 is allowed to propagate to activate the second protection pd2 on the condition that a second control signal CS2 is applied, the second control signal indicating that said predefined conditions to activate the second protection device are satisfied. As illustrated in Fig. 7, the second control signal CS2 is sent from the first software interlocking module SW-I to a second hardware interlocking module HW-I by which the second hardware interlocking module HW-I is instructed to send a second activation signal AS2 to the second protection device pd2.

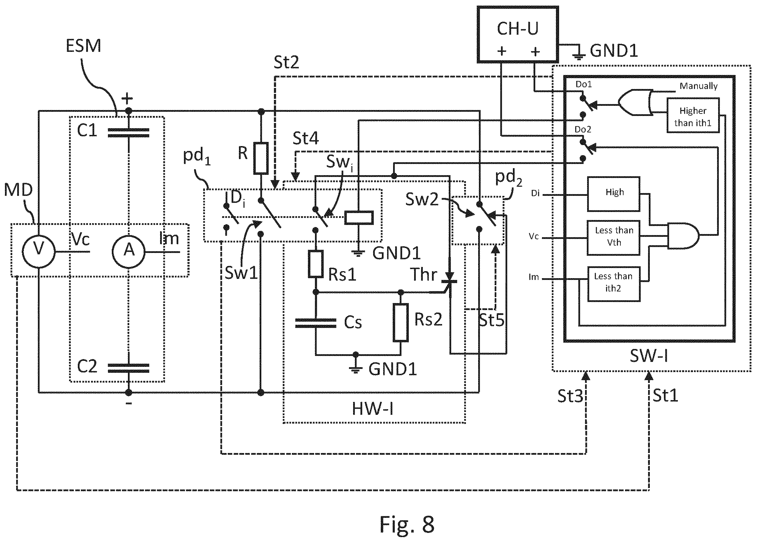

Fig. 8 shows a schematic illustration of energy storage module and a protection circuit according to one embodiment of the disclosure. The embodiment shown in Fig. 7 is in Fig. 8 shown in greater detail. The energy storage module comprises a first capacitor unit C1 arranged in series with a second capacitor unit C2. The first protection device pd1 comprises at least a first switch Sw1. The second protection device pd2 comprises at least a second switch Sw2. The first switch Sw1 is connected in series with a primary resistor R. The first switch Sw1 and the primary resistor R are connected between a positive terminal + and a negative terminal - of the energy storage module ESM.

The first protection device pd1 may optionally further comprise a status switch Di. The status switch Di may be configured to close and open in response to a respective closing action and an opening action of the first switch S1. The status switch Di can thereby be used to confirm a status of the switch S1, for instance, allowing a status signal to propagate to control unit.

The first protection device pd1 may further comprise an auxiliary switch Swi. Upon closing the auxiliary switch Swi, it connects the resistor Rs1 in parallel with the thyristor Thr.

The first protection device pd1 may further comprise a resistor. The resistor is used for filtering purposes to design how fast a threshold value should be hit for the interlocking sequence to continue to the next step.

The protection circuit also comprises a hardware interlocking module HW-I and a software interlocking module SW-I.

With respect to the hardware interlocking module HW-I, a first resistor Rs1 and a thyristor Thr are connected in parallel. A source capacitance Cs and a second resistor Rs2 are connected in parallel. The source capacitance Cs and the second resistor Rs2 are connected between ground GND1 and the first resistor Rs1 and the thyristor Thr.

With respect to the software interlocking module SW-I, an OR-gate is arranged to receive two inputs. As a first input, the OR-gate is provided with a signal indicating a manual operation. As a second input, the OR-gate is provided with a signal indicating if a current Im exceeds a threshold Ith1. As output, the OR-gate is adapted to provide a signal to activate a first logic switch Do1. The first logic switch Do1 will thus activate either in response to a manual command or if a current Im is higher than a threshold current Ith1.

Moreover, an AND-gate is arranged to be capable of receiving three inputs. As a first input, the AND-gate is provided Di. As a second input, the AND-gate is provided Vc. As a third input, the AND-gate is provided Im. As output, the AND-gate is adapted to provide a signal to activate a second logic switch Do2. The second logic switch Do1 will thus activate if Di is high, if Vc is less than a threshold voltage Vth and if current Im is less than a threshold current ith2.

The first logic switch Do1 is arranged to enable connection between a charging unit CH-U and the first protection switch pd1. The second logic switch Do2 is arranged to enable connection between the charging unit CH-U and the hardware interlocking module HW-I.

A measurement device MD is arranged to measure an operational value of the energy storage module ESM, in Fig. 8 exemplified as a voltage Vc and a current Im. The measured operational values are provided to the software interlocking module SW-I in a first step St1. If the current Im is higher than the first current threshold Ith, the first logic switch Do1 is closed. In a second step St2, a signal is sent to the hardware interlocking module HW-I which then activates the first protection device pd1. Consequently, the energy storage module ESM begins to discharge via the primary resistor R and the first protection device pd1.

As the energy storage module ESM discharges, the voltage Vc will decrease and the current Im will decrease. In a third step St3, the current Im, the voltage Vc and the current through switch Di is provided to the software interlocking module SW-I. If the current Im is less than a current threshold ith2 and the voltage Vc is less than a voltage threshold Vth and the current through Di is high, the second logic switch Do2 is closed. In a fourth step St4, a signal is sent to the hardware interlocking module HW-I. The thyristor Thr is activated to allow propagation of a signal to the second protection device pd2 in a fifth step St5 and the second protection device pd2 closes.

Hence, the protection circuit allows via the first protection device pd1 safe discharging of the energy storage module ESM through a first discharge path in which the primary resistor R and the first protection device pd1 are provided, then when it is safe to discharge via a second discharge path, activate the second protection device pd1 to allow further discharging. This provides robust controllability of the protection circuit, which will prevent the energy storage module ESM to be subjected to undesired short circuits.

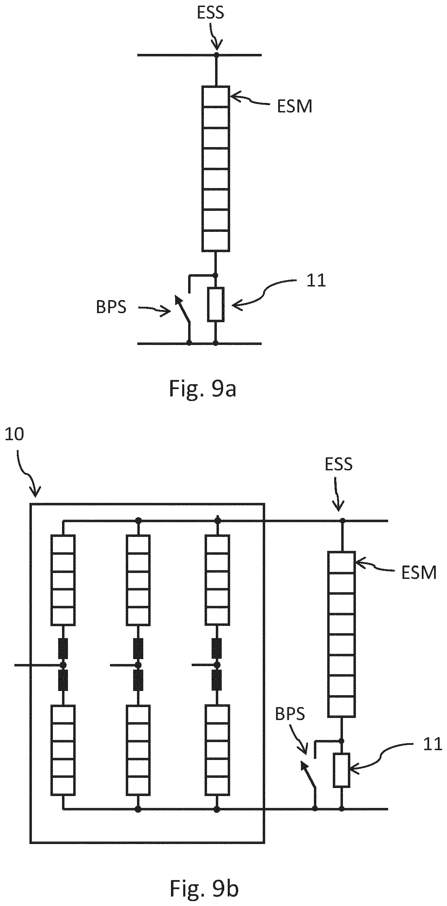

Fig. 9a shows a schematic illustration of energy storage system according to one embodiment of the disclosure. The energy storage system ESS comprises at least a first string including one or more energy storage modules ESM. Each of the one or more energy storage modules ESM in the first string of the ESS is connected to a protection circuit comprising two or more protection devices as herein disclosed. Optionally, the first string comprises a bypass switch BPS arranged in parallel with a resistor 11.

Fig. 9b shows a schematic illustration of energy storage system according to one embodiment of the disclosure. The energy storage system ESS is arranged to lines connecting to a converter 10.

While the foregoing is directed to embodiments of the disclosure, other and further embodiments may be devised without parting from the inventive concept discussed herein. The scope of the invention is however determined by the claims.

## Claims

1. Method of controlling a protection circuit for an energy storage module (ESM) of an energy storage system (ESS), the energy storage module (ESM) having a positive terminal and a negative terminal, wherein two or more protection devices (pd₁, pd₂) of the protection circuit are arranged to be activated to establish two or more respective discharging paths between the positive terminal and the negative terminal, the method comprising:
- measuring (S01) an operational value of the energy storage module (ESM), and
- if a measured operational value deviates from a predefined nominal operational value or nominal operational range,
∘ activating (S11) a first protection device (pd₁) of said two or more protection devices;
∘ determining (S20) if predefined conditions are satisfied to activate a second protection device (pd₂) of said two or more protection devices for further discharging of the energy storage module (ESM) wherein said predefined conditions include the measured operational value being equal to or exceeding or falling below a first threshold value, and
∘ if satisfied, activating (S21) the second protection device (pd2).

2. Method according to claim 1, comprising:
- determining (S10) if predefined initial conditions are satisfied to activate the first protection device (pd₁) of said two or more protection devices for discharging of the energy storage module (ESM), wherein said predefined initial conditions include the measured operational value being equal to or exceeding or falling below an initial threshold value, and
- if satisfied, activating (S11) the first protection device (pd₁) of said two or more protection devices.

3. Method according to claim 2, wherein the first protection device (pd₁) is activated by means of a first activation signal (AS₁), wherein the first activation signal (AS₁) is allowed to propagate to activate the first protection device (pd₁) on the condition that a first control signal (CS₁) is applied, the first control signal (CS₁) indicating that predefined initial conditions are satisfied to activate the first protection device (pd₁).

4. Method according to any of claims 1-3, wherein the second protection device (pd₂) is activated by means of a second activation signal (AS₂), wherein the second activation signal (AS₂) is allowed to propagate to activate the second protection device (pd₂) on the condition that a second control signal (CS₂) is applied, the second control signal (CS₂) indicating that said predefined conditions to activate the second protection device (pd₂) are satisfied.

5. Method according to any preceding claims, wherein the two or more protection devices (pd₁, pd₂, pd_{N}) are arranged for sequential activation, and an activation signal (AS₂, AS_{N}) for a subsequent protection device (pd₂, pd_{N}) is only transmittable if a precursor protection device (pd₁, pd₂) has been activated.

6. Method according to any preceding claims, wherein the two or more protection devices (pd₁, pd₂, pd_{N}) are arranged for sequential activation, and a control signal (CS₂, CS_{N}) for a subsequent protection device (pd₂, pd_{N}) is only transmittable if a precursor protection device (pd₁, pd₂) has been activated.

7. Method according to any preceding claims, wherein said measured operational value is a measured current (Im) or a measured voltage (Vc) of the energy storage module (ESM).

8. Method according to any preceding claims, wherein two protection devices (pd₁, pd₂, pd_{N}) of the two or more protection devices (pd₁, pd₂, pd_{N}) are activated via serial control/activation interlocking or parallel control/activation interlocking.

9. Method according to any of claims, wherein a first discharging path is associated with a first conductive resistance and a second discharging path is associated with a second conductive resistance lower than the first conductive resistance.

10. Method according to claim 9, wherein the first conductive resistance of the first discharging path is provided by at least a first resistor (R), and/or wherein the second conductive resistance of the second discharging path is provided by at least a second resistor having a cumulative series resistance which is lower than a cumulative series resistance of said at least a first resistor.

11. Method according to any of claims 1-10, further comprising:
- after activating the second protection device (pd₂), determining (SN0) if predefined further conditions are satisfied to activate further protection devices (pd_{N}) to initiate further discharging of the energy storage module (ESM), wherein said predefined further conditions include the measured operational value being equal to or exceeding or falling below further threshold values, and
- if satisfied, activating (SN1) further protection devices (pd_{N}).

12. Method according to claim 11, wherein the further protection devices (pd_{N}) are activated by means of further activation signals (AS_{N}), wherein further activation signals (AS_{N}) are allowed to propagate to activate the further protection devices (pd_{N}) on the condition that further control signals (CS_{N}) are applied, the further control signals (CS_{N}) indicating that the predefined further conditions are satisfied.

13. A control unit comprising means to carry out the method according to any of claims 1-12.

14. A protection circuit for an energy storage module (ESM), comprising two or more protection devices (pd₁, pd₂, pd_{N}) arranged to be activated to establish two or more respective discharging paths between a positive terminal and a negative terminal of the energy storage module (ESM), wherein at least two protection devices (pd₁, pd₂, pd_{N}) of the two or more protection devices (pd₁, pd₂, pd_{N}) are interlocked by means of hardware interlocking and software interlocking.

15. An energy storage system (ESS) comprising: an energy storage module (ESM) having a positive terminal and a negative terminal, a protection circuit according to claim 14 arranged so that the two or more protection devices (pd₁, pd₂, pd_{N}), when activated, establish corresponding two or more discharging paths between the positive terminal and the negative terminal, and a control unit according to claim 13.
